Europäisches Patentamt

European Patent Office

Office européen des brevets

(11) Numéro de publication: **0 322 646**
**A1**

## (12) DEMANDE DE BREVET EUROPEEN

(21) Numéro de dépôt: **88120887.0**

(22) Date de dépôt: **14.12.88**

(51) Int. Cl.⁴: **B27L 5/00** , **B23Q 7/03**

(30) Priorité: **28.12.87 FR 8718226**

(43) Date de publication de la demande:
**05.07.89 Bulletin 89/27**

(84) Etats contractants désignés:
**DE ES IT**

(71) Demandeur: **Martin, Michel**
**23, rue de Turin**
**F-75008 Paris(FR)**

(72) Inventeur: **Martin, Michel**
**23, rue de Turin**
**F-75008 Paris(FR)**

(74) Mandataire: **Simonnot, Bernard et al**
**Cabinet Maulvault 49, rue de Province**
**F-75442 Paris Cédex 09(FR)**

(54) **Trancheuse longitudinale à bois et installation de tranchage.**

(57) L'invention concerne une trancheuse longitudinale à bois et une installation de tranchage comportant au moins une telle trancheuse.

Dans cette trancheuse du type comprenant une table d'entrée (3) el une table de sortie (4) portant un couteau (5) faisant un angle d'environ 10° avec la direction de l'avance du billon vert (9) à trancher, lesdites tables sont minces, présentent la même épaisseur et, avantageusement, une surface supérieure (7,8) aspirante et sont chauffantes, un plateau (21) réglable en hauteur étant disposé au-dessous des tables pour recevoir les placages tranchés (10,22) et étant de préférence entraîné en synchronisme avec le billon.

L'invention est applicable à l'obtention rapide de placages plans, secs et parfaitement empilés.

FIG.1

La présente invention concerne une trancheuse longitudinale à bois, c'est-à-dire une machine dans laquelle un tronçon découpé dans une grume de bois vert et dénommé ci-après "billon" à trancher, est introduit en bout et entraîné longitudinalement contre un couteau faisant un angle de l'ordre de 10° avec la direction de l'avance du billon, qui correspond évidemment à l'orientation des fibres ou fil du bois, de telle sorte que l'effet de fendage est presque nul tandis que l'effet de coupe est maximal, ce qui permet d'obtenir des placages d'épaisseur véritablement constante possédant d'excellentes qualités mécaniques et présentant deux surfaces glacées sans aucun des défauts classiques, tels que face ouverte fendue et face fermée arrachée, qui résultent habituellement du déroulage ou du tranchage transversal, que ce dernier soit horizontal ou vertical.

L'invention concerne également une installation de tranchage comportant au moins une trancheuse longitudinale selon l'invention.

Dans le domaine des trancheuses longitudinales, on connaît à l'heure actuelle une machine constituée par une table très épaisse fixée sur un bâti massif, le billon à trancher devant généralement se présenter sous la forme d'une planche ou d'un madrier à section droite carrée ou rectangulaire dont l'épaisseur ne peut dépasser 200 mm et qui est entraîné longitudinalement, par exemple au moyen d'une courroie supérieure pressée sur le bois. Le placage issu de cette trancheuse vient buter contre l'extrémité du bâti de telle sorte que, malgré la présence d'une tôle de guidage inférieure en forme de bec, ledit placage sort de la machine latéralement et en hélice pour tomber selon une direction parfaitement aléatoire sur l'amas en vrac des placages précédemment tranchés, les placages ainsi obtenus ne pouvant même pas être empilés manuellement en vue de leur séchage ultérieur du fait qu'ils sont vrillés indépendamment les uns des autres à la sortie de cette tran cheuse connue.

La présente invention vise à remédier à ces inconvénients en fournissant une trancheuse longitudinale permettant d'obtenir directement des placages secs, parfaitement plans et parfaitement empilés géométriquement.

En outre, une installation de tranchage conforme à l'invention, qui comporte au moins une trancheuse longitudinale selon l'invention, permet d'atteindre une très importante production en nombre de placages parfaits par minute, alors que la force motrice nécessaire est beaucoup plus faible que dans le cas des dérouleuses et des trancheuses transversales horizontales ou verticales, celles-ci ne permettant d'obtenir que des placages présentant de nombreux défauts.

Conformément à l'invention, dans une trancheuse longitudinale dans laquelle la table de coupe comprend une table d'entrée et une table de sortie comportant un couteau encastré de façon réglable dans sa partie antérieure, les tables d'entrée et de sortie sont minces et présentent exactement la même épaisseur et un plateau de réception et d'empilage des placages tranchés, réglable en hauteur, est disposé au-dessous de l'ensemble de la table de coupe, la surface supérieure dudit plateau ou du dernier placage précédemment tranché étant sensiblement à la hauteur de la surface inférieure de la table d'entrée, les surfaces supérieure et inférieure de ladite table d'entrée mince déterminant respectivement deux étages superposés, à savoir un étage de tranchage supérieur correspondant à la face inférieure du billon avant tranchage du placage en cours et un étage de réception et d'empilage inférieur correspondant à la face supérieure du plateau ou du dernier placage précédemment tranché.

Suivant une autre particularité essentielle de la trancheuse longitudinale selon l'invention, le plateau de réception et d'empilage est mobile longitudinalement et relié au moyen d'entraînement du billon de manière à être entraîné exactement en synchronisme avec ledit billon, de telle sorte que la face inférieure du billon en cours de tranchage et la face supérieure du plateau ou du dernier placage précédemment tranché sont entraînées exactement en synchronisme le long des deux étages superposés, ledit plateau pouvant être souple.

En outre, chacune des tables d'entrée et de sortie peut comporter un réseau de canaux débouchant de place en place au niveau de la surface supérieure de ladite table, les deux réseaux étant reliés à une pompe à vide de manière à former un moyen d'application et de maintien du billon contre la table de coupe, le moyen d'entraînement de ce dernier selon la direction de l'avance longitudinale se réduisant à un dispositif pousseur.

Enfin, chacune des tables d'entrée et de sortie peut comporter un réseau de canaux non débouchants parcourus par un fluide chauffant, les deux réseaux étant reliés à un dispositif de chauffage et de pompage du fluide destiné à chauffer la table d'entrée et la table de sortie avec le couteau associé.

Egalement conformément à l'invention, dans une installation de tranchage comportant au moins une trancheuse longitudinale telle que définie ci-dessus, ladite trancheuse est montée à poste fixe dans une partie rectiligne d'un circuit fermé à deux étages superposés respecvement de niveau avec les deux étages superposés de la trancheuse et comprenant une piste horizontale supérieure disposée de niveau avec l'étage de tranchage supérieur de la trancheuse et destinée à supporter un train de cadres rigides mobiles identiques, dont chacun est relié au précédent et au suivant et comporte un moyen pour caler longitudinalement et latéralement un billon à trancher à l'intérieur dudit cadre, et une piste horizontale inférieure destinée à supporter un train de chariots rigides mobiles identiques, dont chacun est relié au précédent et au suivant et porte une table élévatrice comportant un plateau pouvant être souple et supporté par un matelas à coussin d'air, dont ledit plateau, réglable en hauteur et destiné à la réception et à l'empilage des placages tranchés, est réglé de telle sorte que la face supérieure dudit plateau ou du dernier placage précédemment tranché est disposée de niveau avec l'étage de réception et d'empilage inférieur de la trancheuse, le nombre des cadres étant égal au nombre des chariots, chaque cadre étant superposé à un chariot et un moyen d'entraînement étant destiné à entraîner les trains de cadres et de chariots exactement en synchronisme sur leurs pistes respectives, la piste supérieure comprenant un poste de chargement des billons verts et la piste inférieure comprenant un poste de déchargement des piles de placages tranchés, plans et séchés.

D'autres particularités et avantages de la trancheuse longitudinale à bois et de l'installation de tranchage afférente selon la présente invention ressortiront mieux de la description qui va suivre, faite en regard dessins annexés sur lesquels :

la figure 1 représente une vue en coupe longitudinale partielle de la trancheuse supportant un billon en fin de tranchage et du plateau associé de réception et d'empilage des placages tranchés,

la figure 2 représente une vue de dessus schématique d'une installation de tranchage comportant deux trancheuses longitudinales telles que celle représentée sur la figure 1, les cadres situés au niveau desdites trancheuses étant représentés de façon très simplifiée et sans billon à des fins de clarté, et

la figure 3 représente une vue en coupe partielle suivant la ligne 3-3 de la figure 2, le couteau et la fente de la table de coupe ainsi que le placage en cours de tranchage n'étant pas représentés à des fins de simplification.

Sur ces dessins, les mêmes références désignent les mêmes éléments.

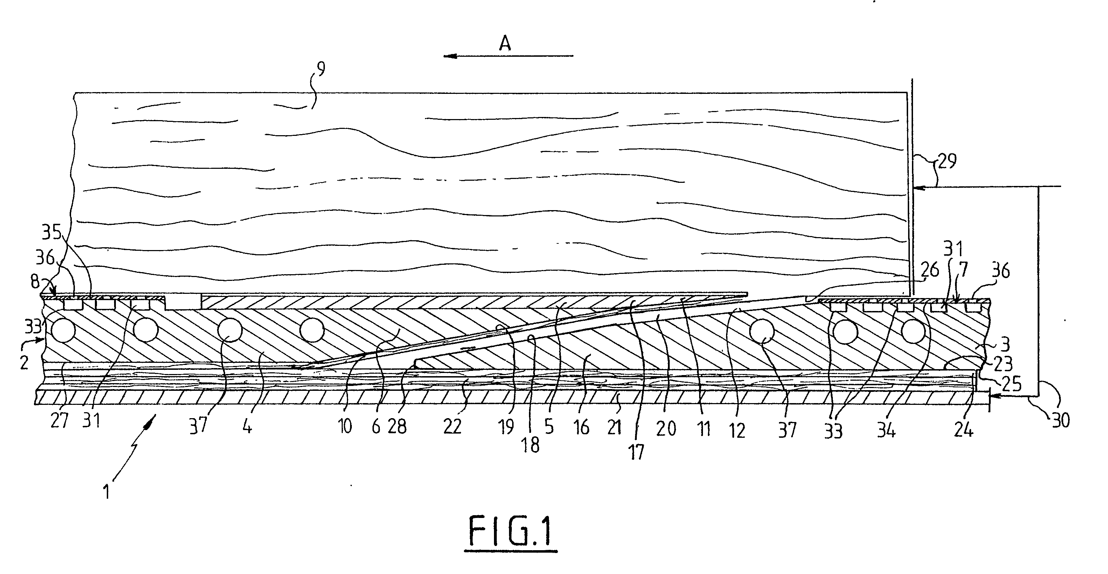

En se référant aux figures 1 à 3 et plus particulièrement à la figure 1, une trancheuse longitudinale à bois, qui est désignée dans son ensemble par 1, est du type comprenant une table de coupe 2, généralement rectangulaire et constituée par une table d'entrée 3 et par une table de sortie 4, cette dernière comportant un couteau 5 encastré de façon réglable connue en soi dans sa partie antérieure 6. Les surfaces supérieures respectives 7 et 8 des tables d'entrée 3 et de sortie 4 sont évidemment planes et horizontales et sont destinées à supporter de façon connue un billon 9 de bois vert non étuvé, de préférence équarri, au cours de son avance dans le sens de la flèche A représentée sur la figure 1. Plus précisément, la surface supérieure 7 de la table d'entrée 3 supporte le billon 9 avant le tranchage d'un placage 10 tandis que la surface supérieure 8 de la table de sortie 4 le supporte après tranchage dudit placage.

Comme cela est connu dans le domaine du tranchage longitudinal, les deux surfaces supérieures 7 et 8 ou, plus exactement, les tables d'entrée 3 et de sortie 4 sont réglables en hauteur l'une par rapport à l'autre en fonction de l'épaisseur du placage à trancher. En outre, le tranchant 11 du couteau 5 et la face postérieure 12 de la table d'entrée 3, qui peut être constituée par une barre de compression encastrée non représentée, sont disposés en regard l'un de l'autre selon une diagonale 13 de la table de coupe 2, qui fait un angle d'environ 10° avec la direction de l'avance du billon 9, celle-ci étant évidemment longitudinale par rapport à la direction générale des fibres, c'est-à-dire le fil du bois.

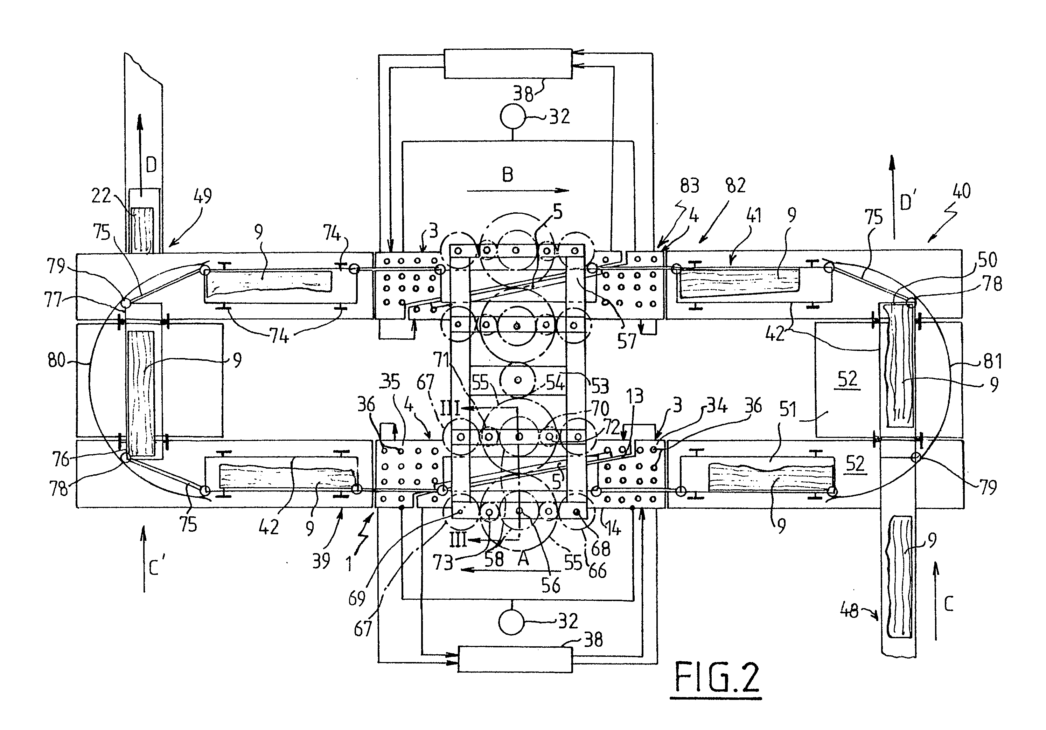

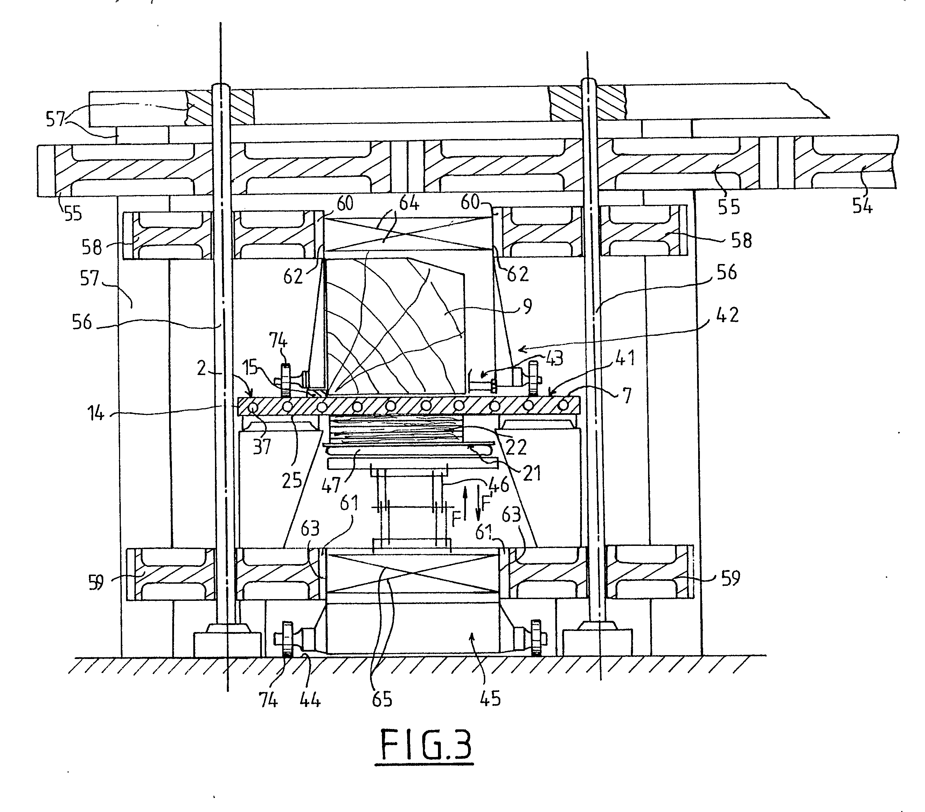

Par ailleurs, une trancheuse longitudinale comprend, de façon connue en soi, un moyen non représenté d'entraînement selon ladite direction longitudinale de l'avance du billon 9 et également un moyen non représenté d'application et de maintien généralement vertical du billon 9 contre la table de coupe horizontale 2. En outre, en se référant aux figures 2 et 3, la table de coupe 2 doit comporter, au niveau de son bord longitudinal extérieur 14 opposé au couteau 5, une butée latérale 15 d'alignement, destinée à maintenir le billon 9 selon ladite direction d'avance longitudinale pendant le tranchage.

Enfin, en se référant à nouveau à la figure 1, la partie postérieure 16 de la table d'entrée 3 et les parties antérieures respectives 17 et 6 du couteau 5 et de la table de sortie 4 comportent des surfaces en regard présentant des formes complémentaires, qui sont respectivement désignées par 18, 19 et qui délimitent entre elles une fente oblique 20 d'évacuation vers le bas du placage 10 en cours de tranchage.

Suivant une particularité essentielle de la trancheuse longitudinale selon l'invention, les tables d'entrée 3 et de sortie 4 sont minces et présentent exactement la même épaisseur, de l'ordre de 100 mm par exemple. En outre, un plateau 21 de réception et d'empilage des placages tranchés 22 est disposé au-dessous de l'ensemble de la table de coupe 2, ce plateau 21 étant réglable en hauteur, de façon connue en soi, de telle sorte que la surface supérieure dudit plateau 21 ou du dernier placage précédemment tranché 24 est sensiblement à la hauteur de la surface inférieure 25 de la table d'entrée 3. Plus précisément, les surfaces supérieure 7 et inférieure 25 de ladite table d'entrée mince 3 déterminent respectivement deux étages superposés, à savoir un étage de tranchage supérieur 7 correspondant à la face inférieure 26 du billon 9 avant tranchage du placage en cours 10 et un étage de réception et d'empilage inférieur 25 correspondant à la face supérieure 23 du plateau 21 ou du dernier placage précédemment tranché 24.

Par ailleurs, il est évident que les surfaces supérieure 8 et inférieure 27 de la table de sortie 4 sont respectivement décalées vers le haut, par rapport aux surfaces supérieure 7 et inférieure 25 de la table d'entrée 3, en fonction du réglage afférent à l'épaisseur désirée pour le placage 10 en cours de tranchage.

Grâce à la faible épaisseur de la table de coupe 2 et à la présence du plateau 21 de réception et d'empilage des placages tranchés selon l'invention, l'extrémité avant du placage 10 en cours de tranchage ne rencontre aucun obstacle pendant son mouvement d'avance. En effet, après avoir été séparée du billon 9 par le tranchant 11 du couteau 5 et après avoir parcouru la fente oblique 20 d'évacuation vers le bas, ladite extrémité avant du placage 10 en cours de tranchage pénètre et glisse dans la zone d'espace horizontale délimitée, grâce au décalage en hauteur des tables d'entrée 3 et de sortie 4, entre la surface inférieure 27 de la table de sortie 4 et la surface supérieure 23 du plateau 21 ou du dernier placage précédemment tranché 24. Compte tenu du fait que toutes les surfaces précitées sont parfaitement polies et "glacées", le glissement du placage 10 en cours de tranchage s'effectue quasi-librement au fur et à mesure de l'avance du billon 9 dont il est encore solidaire. Par conséquent, ledit placage 10 reste sensiblement dans l'axe et au-dessous du billon 9 tout en se déplaçant longitudinalement avec ce dernier jusqu'à la fin de la passe de tranchage.

Cependant, dès que le tranchage est achevé et que le placage 10 n'est plus solidaire du billon 9 et en est matériellement séparé, ledit placage n'est plus entraîné par le billon et il s'arrête immédiatement, sa partie arrière étant encore engagée dans la fente oblique 10 d'évacuation. Par conséquent, il est nécessaire que le placage venant d'être tranché libère ladite fente 20 avant la passe de tranchage suivante, faute de quoi, dès le début de son tranchage, la tête du placage suivant va s'engager dans la fente oblique 20 encore encombrée et va y percuter le talon du placage précédemment tranché, provoquant ainsi une détérioration de l'un et/ou l'autre placage et un mauvais fonctionnement de la machine.

Pour éviter ce risque, il est donc impératif que le placage venant d'être tranché libère complètement la fente d'évacuation 20 au fur et à mesure que chaque passe de tranchage est achevée. Ce résultat peut évidemment être obtenu par voie manuelle, les placages plans sortant de la trancheuse étant immédiatement repris et disposés successivement à la main, soit sur le plateau précité 21, soit sur un plateau d'empilage auxiliaire non représenté. Dans le premier cas, l'opération d'empilage nécessite un court mouvement de va-et-vient destiné d'une part, à faire sortir de la fente oblique 20 toute la partie postérieure du placage venant d'être tranchée en entraînant ce dernier vers l'avant et, d'autre part, à ramener ladite partie postérieure vers l'arrière jusqu'à ce que le talon dudit placage vienne buter contre l'extrémité postérieure 28 de la table d'entrée 3. Dans le second cas, en supposant que le plateau d'empilage auxiliaire soit muni d'une butée d'extrémité et soit disposé dans le prolongement du plateau précité 21 et au-dessous de ce dernier, l'opération d'empilage nécessite un long mouvement d'entraînement vers l'avant et implique un guidage latéral précis du placage aux fins d'empilage sur ledit plateau auxiliaire.

Ce résultat peut également être obtenu par voie mécanique si, après chaque passe de tranchage, le plateau 21 exécute d'abord un mouvement vers l'avant dont la course est au moins égale à la longueur de la fente oblique 20, ce mouvement vers l'avant devant s'effectuer avec appui de bas en haut contre toute la partie antérieure du placage déjà tranché, ladite partie portant elle-même contre la surface inférieure 27 de la table de sortie 4. Le plateau 21 doit ensuite exécuter un mouvement de retour s'effectuant de préférence à l'écart de la table de sortie, soit selon un mouvement en arc de cercle, soit selon un mouvement approximativement rectangulaire, les moyens permettant d'obtenir tous ces mouvements étant bien connus des spécialistes.

Mais, de préférence, suivant une autre particularité essentielle de la trancheuse longitudinale selon l'invention, le plateau 21 de réception et d'empilage des placages tranchés 22 est mobile longitudinalement et est tout simplement relié au moyen 29 d'entraînement du billon 9 de manière à être entraîné exactement en synchronisme avec ledit billon, comme cela est représenté par la ligne de liaison et la flèche 30 sur la figure 1. Il en résulte que la face inférieure 26 du billon 9 en cours de tranchage et la face supérieure 23 du plateau 21 ou du dernier placage précédemment tranché 24 sont entraînées exactement en synchronisme le long des deux étages superposés, c'est-à-dire respectivement le long de l'étage de tranchage supérieur 7 et le long de l'étage de réception et d'empilage inférieur 25.

Dans tous les cas, du fait que la hauteur de la pile des placages tranchés 22 augmente d'une épaisseur de placage plan à chaque passe de tranchage, il est nécessaire que le plateau 21 de réception et d'empilage des placages soit réglable en hauteur, comme cela a été précédemment indiqué. Grâce à des techniques parfaitement connues, mettant en oeuvre notamment des palpeurs et des moteurs de commande électriques, ce réglage en hauteur peut être entièrement automatisé. Il peut cependant être utile de disposer, juste à l'entrée de la table d'entrée 3 et dans le prolongement de sa surface inférieure 25, une tôle horizontale non représentée, dont l'éxtrémité antérieure libre serait coudée vers le haut ou relevée en arc de cercle pour faciliter le passage de la partie frontale de la pile des placages précédemment tranchés 22 sous la table d'entrée 3. En outre, le plateau 21 peut être souple afin de permettre de répartir uniformément la pression d'appui des placages plans et relativement souples contre la face inférieure de la table de coupe pendant le déplacement de la pile en synchronisme avec le billon 9, ladite pile recevant le placage 10 en cours de tranchage et l'empilage géométrique s'effectuant automatiquement grâce à la faible épaisseur de la table de coupe 2 et à la synchronisation de l'avance de la pile avec celle du billon 9.

Suivant encore une autre particularité de la trancheuse longitudinale selon l'invention, chacune des tables d'entrée 3 et de sortie 4 comporte un réseau de canaux 31 débouchant de place en place au niveau de la surface supérieure 7 ou 8 de ladite table 3 ou 4, les deux réseaux étant reliés à une pompe à vide 32 de manière à former le moyen d'application et de maintien du billon 9 contre la table de coupe 2 sous l'effet de la pression atmosphérique, le moyen d'entraînement 29 de ce dernier selon la direction de l'avance longitudinale se réduisant à un dispositif pousseur.

Selon une forme de réalisation préférée, les canaux 31 sont constitués par des rainures horizontales 33 ménagées dans les faces supérieures respectives 7 et 8 des tables d'entrée 3 et de sortie 4 et par des plaques respectives 34 et 35 rapportées sur lesdites faces supérieures et percées de trous 36 verticaux ou obliques débouchant dans lesdites rainures 33.

Suivant encore une autre particularité de la trancheuse longitudinale selon l'invention, chacune des tables d'entrée 3 et de sortie 4 comporte un réseau de canaux 37 non débouchants et parcourus par un fluide chauffant, les deux réseaux étant reliés à un dispositif 38 de chauffage et de pompage du fluide destiné à chauffer la table d'entrée 3 et la table de sortie 4 avec le couteau associé 5 jusqu'à atteindre une température de l'ordre de 150°C à 200°C, un tel dispositif pouvant comprendre par exemple une chaudière avec sa pompe de circulation. Il en résulte que la face inférieure 26 du billon 9 en cours de tranchage subit un étuvage pendant son avance le long de l'étage 7 de tranchage supérieur et que le placage 10 en cours de tranchage subit un début de séchage au cours de sa descente dans la fente oblique 20 d'évacuation et un complément de séchage pendant son avance le long de l'étage 25 de réception et d'empilage inférieur.

Dans ces conditions, le placage 10 qui sort de la trancheuse longitudinale 1 et qui rejoint la pile des placages précédemment tranchés 22 est parfaitement plan, est séché et s'empile de façon parfaitement géométrique sur les autres placages. Pour obtenir un meilleur séchage sans aucune altération de la table de coupe mince 2 sous l'effet de la vapeur d'eau et, par conséquent, sans aucune tache ni marque de condensation sur le placage, il est avantageux que les tables d'entrée 3 et de sortie 4 soient réalisées à partir d'éléments massifs et bons conducteurs de la chaleur, par exemple en un alliage léger ou, de préférence/en un acier inoxydable, tel que ceux que l'on utilise pour réaliser des plateaux de presses hydrauliques. De la même manière, les plaques 34 et 35, qui sont respectivement rapportées sur les tables d'entrée 3 et de sortie 4 comportant des rainures horizontales 33, sont de préférence constituées par de l'acier inoxydable. En outre, pour faciliter l'évacuation de la vapeur d'eau et, par conséquent, le séchage des placages, les surfaces inférieures 25 et 27 des tables d'entrée 3 et de sortie 4 peuvent être rainurées en zig-zag ou en biais ou, de préférence, selon des chevrons symétriques non représentés, de telles rainures évitant les déformations en ondulation ou les stries colorées des placages qui pourraient être provoquées par des rainures longitudinales.

En se référant plus particulièrement aux figures 2 et 3, suivant une particularité essentielle de l'installation de tranchage selon l'invention, celle-ci comporte au moins une trancheuse longitudinale 1 telle que décrite ci-dessus, ladite trancheuse étant montée à poste fixe dans une partie rectiligne 39 d'un circuit fermé 40 à deux étages superposés, qui sont respectivement de niveau avec les deux étages superposés 7 et 25 de la trancheuse.

Plus précisément, ce circuit fermé 40 comprend une piste horizontale supérieure 41 disposée de niveau avec l'étage de tranchage supérieur 7 de la trancheuse 1 et destinée à supporter un train de cadres rigides mobiles identiques 42, présentant de préférence une forme générale rectangulaire, dont chacun est relié au précédent et au suivant et comporte un moyen pousseur 43 pour caler longitudinalement et latéralement un billon 9 à trancher à l'intérieur dudit cadre 42. De préférence, le moyen pousseur 43 agit dans la même direction que la force centrifuge s'exerçant sur chaque billon 9 à l'intérieur de son cadre associé 42 dans les parties en arc de cercle du circuit fermé 40.

Ledit circuit fermé 40 comprend également une piste horizontale inférieure 44 destinée à supporter un train de chariots rigides mobiles identiques 45, présentant de préférence une forme générale rectangulaire identique à celle des cadres 42. Chaque chariot 45 est relié au chariot précédent et au chariot suivant et porte une table élévatrice 46 comportant un plateau 21 pouvant être souple. Par exemple, la table élévatrice 46 est du type couramment dénommé "en X" et est commandée automatiquement de façon connue, au moyen de palpeurs et de moteurs électriques non représentés, de manière à exercer une pression d'application constante, orientée vers le haut et fixée à l'avance. En outre, il est possible de disposer un matelas 47 à coussin d'air entre la table élévatrice 46 et le plateau 21 de telle sorte que la pression constante appliquée par la table 46 s'exerce au niveau du plateau 21 sous la forme d'une pression ponctuelle uniformément répartie. Ledit plateau 21, qui est ainsi réglable en hauteur, comme cela est représenté par les deux flèches verticales de sens contraire F et F′, et est évidemment destiné à la réception et à l'empilage des placages tranchés 22, est réglé de telle sorte que la face supérieure 23 dudit plateau 21 ou dernier placage 24 précédemment tranché est disposée de niveau avec l'étage 25 de réception et d'empilage inférieur de la trancheuse 1, la hauteur de la table élévatrice étant corrigée au fur et à mesure de l'augmentation de la hauteur de la pile des placages tranchés 22.

Dans le circuit fermé 40 à deux étages superposés 7 et 25 respectivement associés à deux pistes superposées 41 et 44, le nombre des cadres 42 est évidemment égal au nombre des chariots 45, chaque cadre 42 étant superposé à un chariot 45, et un moyen d'entraînement, de préférence commun, est destiné à entraîner les trains de cadres 42 et de chariots 45 exactement en synchronisme sur leurs pistes respectives 41 et 44.

Par ailleurs, comme représenté schématiquement sur la figure 2, la piste supérieure 41 comprend un poste supérieur 48 de chargement des billons verts et la piste inférieure 44 comprend un poste inférieur 49 de déchargement des piles de placages 22 tranchés, plans et séchés. Compte tenu de la position du couteau 5 de la trancheuse longitudinale 1, qui détermine le sens de circulation des trains de cadres et chariots superposés selon le sens de la flèche A, il est préférable que le chargement s'effectue, lors d'un arrêt des trains, selon la direction de la flèche C plutôt que selon la direction de la flèche C′, de telle sorte que le billon 9 puisse être calé d'un seul mouvement en butée contre la paroi transversale postérieure 50 du cadre 42 arrêté en regard dudit poste 48 de chargement. De la même manière, en fonction des techniques de préhension ou de poussée utilisées, il peut être préférable de disposer le poste de déchargement 49 de telle sorte que ledit déchargement des piles de placages tranchés 22 puisse s'effectuer, lors d'un arrêt des trains, selon la direction de la flèche D ou selon la direction de la flèche D′.

Suivant une autre particularité essentielle de l'installation de tranchage selon l'invention, la piste horizontale supérieure 41 est constituée par des plaques 51 juxtaposées jointivement et présentant exactement la même épaisseur que les tables d'entrée 3 et de sortie 4 de la trancheuse 1. En outre, lesdites tables 51 peuvent comporter des réseaux de canaux débouchant au niveau de leurs surfaces supérieures 52 et reliés à une ou plusieurs pompes à vide non représentées, de telle sorte que chaque billon 9 calé dans son cadre mobile associé 42 est appliqué et maintenu contre la piste supérieure 41 pendant que ledit cadre est entraîné le long de cette dernière. Enfin, lesdites plaques 51 peuvent également comporter des réseaux de canaux non débouchants reliés à un ou plusieurs dispositifs de chauffage et de pompage de fluide chauffant non représentés, de telle sorte que l'ensemble de l'étage correspondant à la piste supérieure 41 forme l'étage supérieur 7 d'étuvage et de tranchage des billons 9 calés dans les cadres respectifs 42 et que l'ensemble de l'étage correspondant à la face inférieure des plaques juxtaposées 51 et de la trancheuse 1 forme l'étage inférieur 25 de séchage complet des placages 22 empilés sur les plateaux respectifs 21 des chariots 45 à table élévatrice 46.

Selon une forme de réalisation préférée, le moyen d'entraînement en synchronisme des trains de cadres supérieurs 42 et de chariots inférieurs 45 comprend un moteur 53 dont le pignon de sortie 54 est en prise avec deux grandes roues dentées 55 solidaires de deux arbres verticaux principaux 56 montés à rotation sur un bâti fixe 57 de part et d'autre des pistes supérieure 41 et inférieure 44, de préférence au niveau médian de la trancheuse 1. En outre, des roues d'entraînement principales supérieure 58 et inférieure 59 sont calées sur chacun des deux arbres principaux 56 et sont respectivement en prise avec des crémaillères opposées 60 et 61 rapportées sur les faces latérales extérieures 62 et 63 des cadres 42 et des chariots 45, ces dernières étant maintenues par des éléments raidisseurs respectifs 64 et 65. De plus, des roues d'entraînement secondaires supérieures et inférieures d'entrée 66 et de sortie 67, destinées à la fois à l'entraînement longitudinal et au maintien transversal des cadres 42 et chariots 45 et similaires aux roues d'entraînement principales supérieures 58 et inférieures 59, sont calées sur des arbres verticaux secondaires d'entrée 68 et de sortie 69 montés à rotation sur le bâti 57 et sont également en prise avec lesdites crémaillères 60 et 61, ces roues secondaires d'entrée 66 et de sortie 67 étant respectivement entraînées par lesdites roues d'entraînement principales 58 et 59 au moyen de pignons intermédiaires supérieurs et inférieurs d'entrée 70 et de sortie 71 calés sur de courts arbres verticaux intermédiaires d'entrée 72 et de sortie 73 montés à rotation sur le bâti 57. Du fait que la longueur des crémaillères 60 et 61 est très supérieure à la distance séparant respectivement deux cadres successifs 42 et deux chariots successifs 45, les crémaillères opposées d'un cadre 42 et d'un chariot 45 superposés sont encore en prise avec le jeu de roues d'entraînement supérieures et inférieures de sortie 67 lorsque les crémaillères opposées 60 et 61 du cadre 42 et du chariot 45 suivants viennent en prise avec le jeu de roues d'entraînement supérieures et inférieures d'entrée 66, de telle sorte que l'entraînement en synchronisme des trains de cadres 42 et de chariot 45 s'effectue de façon ininterrompue sous la commande du moteur 53.

Suivant d'autres particularités de l'installation de tranchage selon l'invention, chaque cadre supérieur 42 et chaque chariot inférieur 45 est monté sur quatre roues de support 74, la voie des roues associées aux cadres 42 étant nettement plus importante que l'encombrement transversal du couteau 5 de la trancheuse 1. A cet égard, les chemins de roulement correspondant aux roues des cadres 42 présentent nécessairement un léger ressaut au niveau du passage de la table d'entrée 3 à la table de sortie 4. Dans le cas où le placage est épais, ledit ressaut est relativement important et il peut être nécessaire, pour faciliter le passage des roues de support 74, d'employer des lamelles de raccordement souples non représentées et généralement rapportées sur l'une des tables d'entrée ou de sortie.

En outre, les cadres 42 et chariots 45 successifs de chaque train sont reliés les uns aux autres par des tiges 75 qui sont nettement plus courtes que les crémaillères latérales opposées 60, 61 et qui sont articulées sur les deux extrémités 76, 77 des bords latéraux extérieurs 62, 63 des cadres 42 et chariots 45 respectifs, lesdites extrémités 76, 77 étant munies de roues 78, 79 de guidage latéral montées sur des axes verticaux et portant contre des barrières verticales 80, 81 en arc de cercle disposées à poste fixe sur chacune des pistes supérieure 41 et inférieure 44.

Suivant une forme de réalisation préférée de l'installation de tranchage selon l'invention, le circuit fermé 40 comporte deux tronçons rectilignes 39, 82 raccordés par deux tronçons à barrières 80, 81 en demi-cercle, une seconde trancheuse longitudinale 83 étant montée à poste fixe dans le second tronçon rectiligne 82. Dans cette forme de réalisation, les cadres 42 et chariots 45 sont maintenus transversalement et entraînés longitudinalement selon la flèche B, au niveau de cette seconde trancheuse 83, par un ensemble de roues dentées en prise avec le pignon de sortie 54 du moteur 53 et symétrique de l'ensemble à roues dentées associé à la première trancheuse 1. Il en résulte que le nombre de placages tranchés 22 est doublé et que les temps d'étuvage et de séchage sont réduits de moitié pour une même vitesse d'entraînement.

Il est évident que l'installation de tranchage selon l'invention peut comprendre plus de deux trancheuses longitudinales au niveau desquelles les cadres supérieurs 42 et chariots inférieurs 45 sont maintenus transversalement et entraînés longitudinalement en synchronisme sur les pistes superposées 41 et 44 d'un circuit fermé présentant la forme nécessaire.

Lors du fonctionnement de l'installation selon l'invention, le billon 9 calé dans chaque cadre 42 est entraîné le long de la piste supérieure 41 en étant maintenu par la pression atmosphérique contre les faces supérieures des plaques juxtaposées 51 et des tables d'entrée 3 et de sortie 4 de la ou des trancheuses longitudinales. Au niveau de chaque trancheuse, chaque billon 9 perd un placage 10 qui est immédiatement repris par le chariot inférieur correspondant 45 et ajouté à la pile des placages tranchés 22 qu'il transporte, lesdits placages étant plans et géométriquement empilés au fur et à mesure des passes de tranchage, l'étuvage et le préséchage du billon ainsi que le séchage du dernier placage tranché étant fonction de la durée du trajet chauffé entre deux passes de tranchage. Par conséquent, dans le cas de placages épais, il est préférable d'utiliser une seule trancheuse longitudinale dans le circuit fermé et, plus les placages sont minces, plus il est intéressant d'insérer un nombre croissant de trancheuses dans ledit circuit fermé. En outre, il y a lieu de noter que l'épaisseur des placages est réglée pour chaque trancheuse mais que cette dernière peut trancher plusieurs billons successifs, par exemple huit billons dans la forme de réalisation représentée sur la figure 2.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre.

## Revendications

1. Trancheuse longitudinale à bois, du type comprenant une table de coupe (2) généralement rectangulaire constituée par une table d'entrée (3) et par une table de sortie (4) comportant un couteau (5) encastré de façon réglable dans sa partie antérieure (6), les surfaces supérieures planes horizontales (7, 8) des tables d'entrée (3) et de sortie (4) étant destinées à supporter un billon (9) de bois vert non étuvé, de préférence équarri, au cours de son avance, respectivement avant et après tranchage d'un placage (10), et étant réglables en hauteur l'une par rapport à l'autre en fonction de l'épaisseur du placage à trancher, le tranchant (11) du couteau (5) et la face postérieure (12) de la table d'entrée (3) étant disposés en regard l'un de l'autre selon une diagonale (13) de la table de coupe (2) faisant un angle d'environ 10° avec la direction de l'avance du billon, qui est longitudinale par rapport au fil du bois de ce dernier, un moyen d'entraînement selon ladite direction longitudinale et un moyen d'application et de maintien généralement vertical contre la table de coupe horizontale étant associés au billon (9) et la table de coupe (2) comportant, au niveau de son bord longitudinal extérieur (14) opposé au couteau (5), une butée (15) d'alignement latérale destinée à maintenir le billon (9) selon ladite direction longitudinale pendant le tranchage, la partie postérieure (16) de la table d'entrée (3) et les parties antérieures (17, 6) du couteau (5) et de la table de sortie (4) présentant des surfaces (18, 19) de formes complémentaires délimitant entre elles une fente oblique (20) d'évacuation vers le bas du placage (10) en cours de tranchage, trancheuse caractérisée par le fait que les tables d'entrée (3) et de sortie (4) sont minces et présentent exactement la même épaisseur et qu'un plateau (21) de réception et d'empilage des placages tranchés (22), réglable en hauteur, est disposé au-dessous de l'ensemble de la table de coupe (2), la surface supérieure (23) dudit plateau (21) ou du dernier placage précédemment tranché (24) étant sensiblement à la hauteur de la surface inférieure (25) de la table d'entrée (3), les surfaces supérieure (7) et inférieure (25) de ladite table d'entrée mince (3) déterminant respectivement deux étages superposés, à savoir un étage de tranchage supérieur (7) correspondant à la face inférieure (26) du billon (9) avant tranchage du placage en cours (10) et un étage de réception et d'empilage inférieur (25) correspondant la face supérieure (23) du plateau (21) ou du dernier placage précédemment tranché (24).

2. Trancheuse longitudinale suivant la revendication 1, caractérisée par le fait que le plateau (21) de réception et d'empilage est mobile longitudinalement et est relié au moyen (29) d'entraînement du billon (9) de manière à être entraîné exactement en synchronisme avec ledit billon, de telle sorte que la face inférieure (26) du billon (9) en cours de tranchage et la face supérieure (23) du plateau (21) ou du dernier placage précédemment tranché (24) sont entraînées exactement en synchronisme le long des deux étages superposés, respectivement le long de l'étage de tranchage supérieur (7) et le long de l'étage de réception et d'empilage inférieur (25), ledit plateau (21) pouvant être souple.

3. Trancheuse longitudinale suivant l'une des revendications 1 ou 2, caractérisée par le fait que chacune des tables d'entrée (3) et de sortie (4) comporte un réseau de canaux (31) débouchant de place en place au niveau de la surface supérieure (7, 8) de ladite table (3,4), les deux réseaux étant reliés à une pompe à vide (32) de manière à former le moyen d'application et de maintien du billon (9) contre la table de coupe (2) sous l'effet de la pression atmosphérique, le moyen d'entraînement (29) de ce dernier selon la direction de l'avance longitudinale se réduisant à un dispositif pousseur.

4. Trancheuse longitudinale suivant la revendication 3, caractérisée par le fait que les canaux (31) sont constitués par des rainures horizontales (33) ménagées dans les faces supérieures respectives (7, 8) des tables d'entrée (3) et de sortie (4) et par des plaques respectives (34, 35) rapportées sur lesdites faces supérieures (7, 8) et percées de trous (36) verticaux ou obliques débouchant dans lesdites rainures (33).

5. Trancheuse longitudinale suivant l'une quelconque des revendications 1 à 4, caractérisée par le fait que chacune des tables d'entrée (3) et de sortie (4) comporte un réseau de canaux (37) non débouchants et parcourus par un fluide chauffant, les deux réseaux étant reliés à un dispositif (38) de chauffage et de pompage du fluide destiné à chauffer la table d'entrée (3) et la table de sortie (4) avec le couteau associé (5), de telle sorte que la face inférieure (26) du billon (9) en cours de tranchage subit un étuvage pendant son avance le long de l'étage de tranchage supérieur (7) et que le placage (10) en cours de tranchage subit un début de séchage au cours de sa descente dans la fente oblique (20) d'évacuation et un complément de séchage pendant son avance le long de l'étage (25) de réception et d'empilage inférieur.

6. Installation de tranchage comportant au moins une trancheuse longitudinale suivant l'une quelconque des revendications 1 à 5, caractérisée par le fait que ladite trancheuse (1) est montée à poste fixe dans une partie rectiligne (39) d'un circuit fermé (40) à deux étages superposés respectivement de niveau avec les deux étages superposés (7, 25) de la trancheuse et comprenant une piste horizontale supérieure (41) disposée de niveau avec l'étage de tranchage supérieur (7) de la trancheuse et destinée à supporter un train de cadres rigides mobiles identiques (42), dont chacun est relié au précédent et au suivant et comporte un moyen pousseur (43) pour caler longitudinalement et latéralement un billon (9) à trancher à l'intérieur dudit cadre (42), et une piste horizontale inférieure (44) destinée à supporter un train de chariots rigides mobiles identiques (45), dont chacun est relié au précédent et au suivant et porte une table élévatrice (46) comportant un plateau (21) pouvant être souple et supporté par un matelas (47) à coussin d'air, dont ledit plateau (21), réglable en hauteur et destiné à la réception et à l'empilage des placages tranchés (22), est réglé de telle sorte que la face supérieure (23) dudit plateau (21) ou du dernier placage précédemment tranché (24) est disposée de niveau avec l'étage (25) de réception et d'empilage inférieur de la trancheuse (1), le nombre des cadres (42) étant égal au nombre des chariots (45), chaque cadre (42) étant superposé à un chariot (45) et un moyen d'entraînement étant destiné à entraîner les trains de cadres (42) et de chariots (45) exactement en synchronisme sur leurs pistes respectives (41, 44), la piste supérieure (41) comprenant un poste (48) de chargement des billons verts (9) et la piste inférieure (44) comprenant un poste (49) de déchargement des piles de placages (22) tranchés, plans et séchés.

7. Installation suivant la revendication 6, caractérisée par le fait que la piste horizontale supérieure (41) est constituée par des plaques (51) juxtaposées jointivement et présentant exactement la même épaisseur que les tables d'entrée (3) et de sortie (4) de la trancheuse (1), lesdites plaques (51) pouvant comporter des réseaux de canaux débouchant au niveau de leurs surfaces supérieures (52) et reliés à une ou plusieurs pompes à vide, de telle sorte que chaque billon (9) calé dans son cadre mobile associé (42) est appliqué et maintenu contre la piste supérieure (41) pendant que ledit cadre est entraîné le long de cette dernière, lesdites plaques (51) pouvant également comporter des réseaux de canaux non débouchants reliés à un ou plusieurs dispositifs de chauffage et de pompage de fluide chauffant, de telle sorte que l'ensemble de l'étage correspondant à la piste supérieure (41) forme l'étage supérieur (7) d'étuvage et de tranchage des billons (9) calés dans les cadres respectifs (42) et que l'ensemble de l'étage correspondant à la face inférieure des plaques juxtaposées (51) et de la trancheuse (1) forme l'étage inférieur (25) de séchage complet des placages (22) empilés sur les plateaux respectifs (21) des chariots (45) à table élévatrice (46).

8. Installation suivant l'une des revendications 6 ou 7, caractérisée par le fait que le moyen d'entraînement en synchronisme des trains de cadres supérieurs (42) et de chariots inférieurs (45) comprend un moteur (53) dont le pignon de sortie (54) est en prise avec deux grandes roues dentées (55) solidaires de deux arbres verticaux principaux (56) montés à rotation sur un bâti fixe (57) de part et d'autre des pistes supérieure (41) et inférieure (44), de préférence au niveau médian de la trancheuse (1), des roues d'entraînement principales supérieure (58) et inférieure (59) étant calées sur chacun des deux arbres principaux (56) et étant respectivement en prise avec des crémaillères opposées (60, 61) rapportées sur les faces latérales extérieures (62, 63) des cadres (42) et des chariots (45), des roues d'entraînement secondaires supérieures et inférieures d'entrée (66) et de sortie (67), destinées à la fois à l'entraînement longitudinal et au maintien transversal des cadres (42) et chariots (45) et similaires aux roues d'entraînement principales supérieures (58) et inférieures (59), étant calées sur des arbres verticaux secondaires d'entrée (68) et de sortie (69) montés à rotation sur le bâti (57), étant également en prise avec lesdites crémaillères (60, 61) et étant respectivement entraînées par lesdites roues d'entraînement principales (58, 59) au moyen de pignons intermédiaires supérieurs et inférieurs d'entrée (70) et de sortie (71) calés sur de courts arbres verticaux intermédiaires d'entrée (72) et de sortie (73) montés à rotation sur le bâti (57), la longueur des crémaillères (60, 61) étant très supérieure à la distance séparant respectivement deux cadres successifs (42) et deux chariots successifs (45), de telle sorte que les crémaillères opposées d'un cadre (42) et d'un chariot (45) superposés sont encore en prise avec le jeu de roues d'entraînement supérieures et inférieures de sortie (67) lorsque les crémaillères opposées (60, 61) du cadre (42) et du chariot (45) suivants viennent en prise avec le jeu de roues d'entraînement supérieures et inférieures d'entrée (66).

9. Installation suivant l'une quelconque des revendications 6 à 8, caractérisée par le fait que chaque cadre supérieur (42) et chaque chariot inférieur (45) est monté sur quatre roues de support (74), la voie des roues associées aux cadres (42) étant nettement plus importante que l'encombrement transversal du couteau (5) de la trancheuse (1), et que les cadres (42) et chariots (45) successifs de chaque train sont reliés les uns aux autres par des tiges (75) qui sont nettement plus courtes que les crémaillères latérales opposées (60, 61) et qui sont articulées sur les deux extrémités (76, 77) des bords latéraux extérieurs (62, 63) des cadres (42) et chariots (45) respectifs, lesdites extrémités (76, 77) étant munies de roues (78, 79) de guidage latéral montées sur des axes verticaux et portant contre des barrières verticales (80, 81) en arc de cercle disposées à poste fixe sur chacune des pistes supérieure (41) et inférieure (44).

10. Installation suivant l'une quelconque des revendications 6 à 9, caractérisée par le fait que le circuit fermé (40) comporte deux tronçons rectilignes (39, 82) raccordés par deux tronçons à barrières (80, 81) en demi-cercle, une seconde trancheuse longitudinale (83) étant montée à poste fixe dans le second tronçon rectiligne (82), les cadres (42) et chariots (45) étant maintenus transversalement et entraînés longitudinalement au niveau de cette seconde trancheuse (83) par un ensemble de roues dentées en prise avec le pignon de sortie (54) du moteur (53) et symétrique de l'ensemble de roues dentées associé à la première trancheuse (1), de telle sorte que le nombre de placages tranchés (22) est doublé et que les temps d'étuvage et de séchage sont réduits de moitié pour une même vitesse d'entraînement.

FIG.1

FIG.2

EP 0 322 646 A1

FIG.3

EP 0 322 646 A1

Office européen
des brevets

**RAPPORT DE RECHERCHE EUROPEENNE**

Numero de la demande

EP 88 12 0887

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 320 898 (THERMOFORM) <br> * En entier * <br> --- | 1 | B 27 L 5/00 <br> B 23 Q 7/03 |
| A | US-A-2 720 230 (LOCKWOOD) <br> * Figure 1 * <br> --- | 1 | |
| A | FR-A-2 135 906 (CREMONA) <br> * Page 1, lignes 1-8; page 2, lignes 14-17,24-26; figure 1 * <br> --- | 1 | |
| A | FR-A-2 274 525 (CAPITAL MACHINE CO.) <br> * Page 1, lignes 26-35 * <br> --- | 3 | |
| A | US-A-3 441 069 (KOSS) <br> * Revendication 1 * <br> --- | 5 | |
| A | FR-A-1 590 933 (STORTI & BOTTER) <br> * Page 1, lignes 1-11; figures * <br> --- | 6,9,10 | |
| A | FR-A-1 076 268 (VIGNON) <br> ----- | | |

**DOMAINES TECHNIQUES RECHERCHES (Int. Cl.4)**

B 27 L
B 23 Q

Le présent rapport a été établi pour toutes les revendications

| Lieu de la recherche | Date d'achèvement de la recherche | Examinateur |
|---|---|---|
| LA HAYE | 28-03-1989 | HUGGINS J.D. |